Europäisches Patentamt

European Patent Office

Office européen des brevets

(19)

(11) Veröffentlichungsnummer: **0 276 443 B1**

(12) **EUROPÄISCHE PATENTSCHRIFT**

(45) Veröffentlichungstag der Patentschrift: **24.07.91**

(51) Int. Cl.⁵: **H01S 3/041**

(21) Anmeldenummer: **87118520.3**

(22) Anmeldetag: **14.12.87**

(54) Quer angeregter Wellenleiter-Laser.

(30) Priorität: **17.12.86 DE 3643133**

(43) Veröffentlichungstag der Anmeldung:
**03.08.88 Patentblatt 88/31**

(45) Bekanntmachung des Hinweises auf die
Patenterteilung:
**24.07.91 Patentblatt 91/30**

(84) Benannte Vertragsstaaten:
**CH DE FR GB IT LI NL**

(56) Entgegenhaltungen:
**DE-A- 3 039 634**
**DE-A- 3 327 257**
**FR-A- 2 559 966**
**GB-A- 2 071 904**

(73) Patentinhaber: **Siemens Aktiengesellschaft**
**Wittelsbacherplatz 2**
**W-8000 München 2(DE)**

(72) Erfinder: **Heynisch, Hinrich, Dr. rer. nat.**
**Im Birket 7**
**W-8032 Gräfelfing(DE)**
Erfinder: **Hübner, Klemens, Dipl.-Ing. (FH)**
**Zaunkönigstrasse 28**
**W-8012 Ottobrunn(DE)**
Erfinder: **Krüger, Hans, Dipl.-Phys.**
**Peralohstrasse 13**
**W-8000 München 83(DE)**
Erfinder: **Weber, Hubert, Dipl.-Phys.**
**Bahnhofstrasse 26**
**W-8900 Augsburg(DE)**

## Beschreibung

Die Erfindung betrifft einen quer angeregten Wellenleiter-Laser nach dem Oberbegriff des Patentanspruchs 1. Ein derartiger Laser ist aus der DE-A-35 04 403 bekannt. Dort sind in gesonderten Nuten in einem Rechteckprofilstab aus Keramik ein Entladungskanal, auf beiden Seiten des Entladungskanals Elektroden und außerhalb der Elektroden Kühlkanäle untergebracht. Die Nuten sind mit einem Deckprofil mit rechteckigem Querschnitt abgedeckt. Dieser Aufbau ist für hohe Laserleistungen nur wenig geeignet, da die Kühlung des Entladungskanals auf einem relativ weiten Weg um die Elektroden herum erfolgen muß und dadurch ein hoher Temperaturgradient in der Keramik entsteht, und da der Aufbau bezogen auf den Entladungskanal thermisch unsymmetrisch ist und somit zu einem Verbiegen des Profiles und damit zu einer erheblichen Reduzierung der Laserleistung führen kann.

Die DE-A-33 27 257 beschreibt einen quer angeregten Gaslaser mit einem Entladungskanal aus Keramik, an dessen Außenwand metallische Elektroden angebracht sind, in die Kühlkanäle eingeformt sind. Diese Ausführungsform ermöglicht keine vollständige Anpassung des Temperaturkoeffizienten zwischen Kühlkanal und Entladungskanal. Thermische Spannungen sind nicht vollständig zu vermeiden, da auch bei den optimal angepaßten Metallen die Anpassung nur für einen bestimmten Temperaturbereich gilt.

Die DE-A-30 09 611 beschreibt ein Verfahren zur Herstellung eines Wellenleiter-Laserkörpers, bei dem eine Laserkapillare und mit dieser radial verbundene Hohlräume durch ein Strangpreßverfahren hergestellt sind. Die Hohlräume dienen als Vorratsbehälter für Lasergas. Die DE-A-30 39 634 beschreibt dieselbe Form von Wellenleiter-Laserkörpern; die Laserkapillare und die Hohlräume sind jedoch im Flammspritzverfahren hergestellt. Nach dieser Patentschrift sollen die radial vom Entladungsraum beabstandeten Hohlräume unter anderem auch als Kühlkanäle eingesetzt werden. Die stranggepreßte Ausführungsform läßt sich allerdings nicht mit der für einen hohen Wirkungsgrad erforderlichen Präzision fertigen.

Die Aufgabe, die der vorliegenden Erfindung zugrundeliegt, besteht in einer Erhöhung des Wirkungsgrades von Lasern auch bei hohen Laserleistungen. Diese Aufgabe wird bei einem Laser gemäß dem Oberbegriff des Patentanspruchs 1 durch die kennzeichnenden Merkmale gelöst. Die einzelnen Profile können in einfachen Vorrichtungen hergestellt werden und bei Bedarf ohne Schwierigkeiten auf Maß geschliffen werden. Dadurch läßt sich eine hohe Präzision in den mechanischen Abmessungen erreichen. Diese hohe Präzision bleibt auch nach dem Zusammenlöten von erfindungsgemäß gestalteten Teilen erhalten, eine Verbiegung tritt auch bei Temperaturschwankungen nicht auf. Dies gilt insbesondere beim Verlöten der Profile mittels Glaslot, da hierfür nur geringe Löttemperaturen erforderlich sind. Der Zusammenbau aus einzelnen Profilteilen ermöglicht außerdem den Einsatz von Profilen, die im Bereich der Lötflächen besonders dünnwandig sind. Dadurch ergibt sich eine sehr geringe Wandstärke zwischen dem Entladungskanal und den angrenzenden Kühlkanälen. So läßt sich ein sehr kleiner Temperaturgradient, z.B. kleiner als 2° C in der Keramik auch bei hohen Laser-Pumpleistungsdichten realisieren, und damit der hohe Wirkungsgrad des Lasers erhalten.

Gut überschaubare Verhältnisse sind erreicht, wenn der Querschnitt des Entladungskanals achssymmetrisch ist. Dabei kann beispielsweise der Entladungskanal rechteckförmig oder quadratisch sein oder auch ein kissenförmig verzeichnetes Rechteck oder Quadrat darstellen, wie es im Stand der Technik empfohlen wird. Ein besonders vorteilhafter Wärmeübergang ist jedoch stets dann realisierbar, wenn die dem Kühlkanal zugewandte Begrenzungsfläche des Entladungskanals und die dem Entladungskanal zugewandte Mantelfläche des Kühlkanals eben und zueinander parallel sind und wenn der Querschnitt des Kühlkanals zur Flächennormalen auf die entsprechende Begrenzungsfläche des Entladungskanals spiegelsymmetrisch ist.

Das Entladungsprofil setzt sich vorteilhaft aus einem Kanalteil und einem Abdeckteil zusammen, wobei das Kanalteil als Entladungskanal eine Nut enthält, wobei das Abdeckteil dieselbe Wandstärke besitzt wie der Boden unter der Nut und dieselbe Breite wie das Entladungsprofil und über der Nut angeordnet ist und wobei die beiden angrenzenden Kühlprofile aus untereinander gleichen Strangpreßprofilen gebildet sind.

Dabei ist vorteilhaft auf die Lötflächen des Entladungsprofils jeweils auf der vom Entladungskanal abgewandten Seite eine Leiterbahn, welche sich als Elektrode zur Queranregung des Lasergases eignet, aufgebracht.

Ein besonders temperaturunempfindlicher Laser wird erreicht, indem alle Profile und die auf den Stab aufgelöteten Stirnplatten aus demselben Material bestehen und mittels Glaslot zusammengelötet sind. Die Stirnplatten sind im Bereich des Entladungskanals mit einer Ausnehmung versehen, wobei auf die Stirnplatten Spiegelträger aus Metall mit einem an der Keramik angepaßten Temperaturkoeffizienten aufgelötet sind. Dies ermöglicht das Anbringen von justierbaren Spiegeln.

Die beiden Kühlprofile sind vorteilhaft Rechteckprofile, die im Bereich ihrer Stirnflächen vom Kühlkanal nach außen führende Bohrungen besitzen, in deren Bereich Kühlwasseranschlüsse aufgelötet sind. Die Rechteckform erleichtert das lagegerechte Anbringen der Anschlüsse für die Wasserkühlung, welche eine besonders gleichmäßige Einhaltung der Entladungstemperatur ermöglicht. Eine für eine hohe Maßhaltigkeit ausreichend gleichmäßige Kühlung läßt sich erreichen, wenn der Querschnitt des Entladungskanals zwischen etwa 1qmm und 16qmm liegt. Ein vorteilhafter Temperaturgradient wird erreicht, wenn und die gesamte Wandstärke zwischen dem Entladungskanal und einem benachbarten Kühlkanal nicht größer ist als die Ausdehnung des Entladungskanals in Richtung der Flächennormalen auf die Lötflächen des Entladungsprofils.

Als besonders vorteilhaftes Material hat sich für alle Keramikteile eine $Al_2O_3$-Keramik erwiesen.

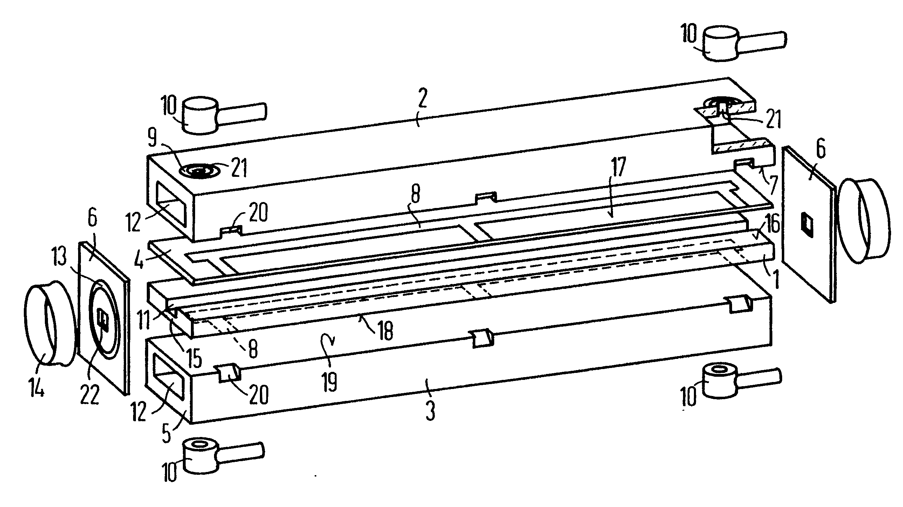

Die Erfindung wird nun anhand einer Figur näher erläutert. Sie ist nicht auf das in der Figur gezeigte Beispiel beschränkt. Die Figur zeigt ein Schrägbild eines erfindungsgemäßen Wellenleiter-Lasers mit Einzeldarstellung der verschiedenen Teile (Explosionsbild).

Ein Kanalteil 1 enthält einen Entladungskanal in Form einer Nut 11. Die Nut 11 ist durch ein Abdeckteil 4 verschlossen, welches dieselbe Dicke hat wie der Boden 15 unter der Nut 11. Das Kanalteil 1 und das Abdeckteil 4 bilden ein Entladungsprofil. Das Abdeckteil 4 ist auf die Lötfläche 16 des Kanalteiles 1 mittels Glaslot aufgelötet. Auf die Lötfläche 17 des Abdeckteiles 4 und die Lötfläche 18 des Kanalteiles 1 ist jeweils ein Kühlprofil 2 mit einer entsprechenden Lötfläche 7, 19 aufgelötet. Auf die Stirnseiten 5 der genannten Profile ist auf jeder Seite des Laserstabes eine Stirnplatte 6 aufgelötet, welche die Kühlkanäle und den Entladungskanal 11 vakuumdicht verschließt. Die beschriebenen Lötstellen sind mittels Glaslot durchgeführt.

Auf die Lötfläche 17 des Abdeckteils 4 und auf die Lötfläche 18 des Kanalteiles 1 ist jeweils eine Leiterbahn 8 aufgebracht, die zur Queranregung des Lasergases mittels Hochfrequenz geeignet ist. Die Leiterbahnen 8 sind vorzugsweise mittels Siebdruck aufgebracht. Sie sind über Ausnehmungen 20 in den Kühlprofilen 2 und 3 für eine Kontaktierung zugängig.

Von den Kühlkanälen 12 zu den äußeren Begrenzungsflächen der Profile 2 bzw. 3 verlaufen Bohrungen 21. Im Bereich der Bohrungen 21 sind Lötflächen 9 vorgesehen, auf die Wasseranschlüsse 10 aufgelötet sind.

Die Deckplatten 6 enthalten Durchbrüche 22, welche den Entladungskanal 11 freilassen. Auf die Außenseiten der Stirnplatten 6 sind Spiegelhalterungen 14 im Bereich von Lötzonen 13 aufgelötet.

Das Entladungsprofil 1 und die Kühlprofile 2 und 3 und die Stirnplatten 6 bestehen vorzugsweise aus $Al_2O_3$-Keramik und haben untereinander denselben Temperaturausdehnungskoeffizienten. Die Wasseranschlüsse 10 und die Spiegelhalterungen 14 bestehen vorzugsweise aus einem Metall mit angepaßtem Temperaturausdehnungskoeffizienten. Die Lötbereiche 9 und 13 können normale Metall-Keramik-Lötverbindungen beinhalten.

## Patentansprüche

1. Quer angeregter Wellenleiter-Laser, welcher zumindest einen Entladungskanal und zwei zu diesem symmetrisch angeordnete Kühlkanäle enthält, wobei die Kanäle in einem Stab aus vakuumgeeignetem Hochtemperatur-Isolierstoff untergebracht sind, wobei dieser Stab aus unterschiedlich profilierten Teilen zusammengesetzt ist, wobei die einzelnen Profile über ihre gesamte Längsausdehnung miteinander verlötet sind, wobei der Entladungskanal durch eine Nut (11) in einem der Profilteile (1) gebildet ist und wobei die Nut (11) und die Kühlkanäle jeweils auf der Stirnseite des Stabes durch eine aufgelötete Stirnplatte (6) abgeschlossen sind, **dadurch gekennzeichnet**, daß der Stab zumindest ein Entladungsprofil (1, 4) und zwei Kühlprofile (2, 3) enthält, daß die drei Profile zumindest annähernd denselben Temperaturausdehnungskoeffizienten besitzen, daß das Entladungsprofil den Entladungskanal enthält und auf zwei einander gegenüber liegenden Seiten des Entladungskanals Lötflächen (17, 18) besitzt, daß auf diese beiden Lötflächen je ein Kühlprofil (2, 3) aufgelötet ist, daß die Kühlprofile Kühlkanäle (12) enthalten, deren dem Entladungskanal zugewandte Mantelflächen jeweils breiter sind als die senkrechte Projektion der zunächst liegenden Begrenzungsfläche des Entladungskanals auf die ihm zugewandte Mantelfläche des Kühlkanals.

2. Wellenleiter-Laser nach Anspruch 1, **dadurch gekennzeichnet**, daß der Querschnitt des Entladungskanals rotationssymmetrisch ist.

3. Wellenleiter-Laser nach einem der Ansprüche 1 oder 2, **dadurch gekennzeichnet**, daß die dem Kühlkanal zugewandte Begrenzungsfläche des Entladungskanals und die dem Entladungskanal zugewandte Mantelfläche des Kühlkanals eben und zueinander parallel sind und daß der Querschnitt des Kühlkanals zur Flächennormalen auf die entsprechende Begrenzungsfläche des Entladungskanals spiegelsymmetrisch ist.

4. Wellenleiter-Laser nach Anspruch 3, **dadurch gekennzeichnet**, daß die Kühlkanäle und der Entladungskanal einen rechteckförmigen Querschnitt besitzen.

5. Wellenleiter-Laser nach einem der Ansprüche 1 bis 4, **dadurch gekennzeichnet**, daß das Entladungsprofil sich aus einem Kanalteil und einem Abdeckteil zusammensetzt, daß das Kanalteil als Entladungskanal eine Nut enthält, daß das Abdeckteil dieselbe Wandstärke besitzt wie der Boden unter der Nut und dieselbe Breite wie das Kanalteil und über der Nut angeordnet ist und daß die beiden angrenzenden Kühlprofile aus einander gleichen Strangpreßprofilen gebildet sind.

6. Wellenleiter-Laser nach einem der Ansprüche 1 bis 5, **dadurch gekennzeichnet**, daß auf der Lötflächen des Entladungsprofils jeweils auf der vom Entladungskanal abgewandten Seite eine Leiterbahn, welche sich als Elektrode zur Queranregung des Lasergases eignet, aufgebracht ist.

7. Wellenleiter-Laser nach einem der Ansprüche 1 bis 6, **dadurch gekennzeichnet**, daß alle Profile und die auf den Stab aufgelöteten Stirnplatten aus dem gleichen Material bestehen und mittels Glaslot zusammengelötet sind.

8. Wellenleiter-Laser nach einem der Ansprüche 1 bis 7, **dadurch gekennzeichnet**, daß die Stirnplatten im Bereich des Entladungskanals je eine Ausnehmung besitzen und daß auf die Stirnplatten Spiegelträger aus Metall mit einem an den des Isolierstoffes angepaßten Temperaturausdehnungskoeffizienten aufgelötet sind.

9. Wellenleiter-Laser nach einem der Ansprüche 1 bis 8, **dadurch gekennzeichnet**, daß die beiden Kühlprofile Rechteckprofile sind, im Bereich ihrer Stirnflächen vom Kühlkanal nach außen führende Bohrungen besitzen und daß an diese Bohrungen anschließend Kühlwasseranschlüsse aufgelötet sind.

10. Wellenleiter-Laser nach einem der Ansprüche 1 bis 9, **dadurch gekennzeichnet**, daß der Entladungskanal einen Querschnitt von etwa 1qmm bis 16qmm besitzt.

11. Wellenleiter-Laser nach einem der Ansprüche 1 bis 10, **dadurch gekennzeichnet**, daß die gesamte Wandstärke zwischen dem Entladungskanal und einem benachbarten Kühlkanal nicht größer ist als die Ausdehnung des Entladungskanales in Richtung der Flächennormalen auf die Lötflächen des Entladungsprofiles.

12. Wellenleiter-Laser nach einem der Ansprüche 1 bis 11, **dadurch gekennzeichnet**, daß die Lötflächen der Kühlprofile und des Entladungsprofiles eben geschliffen sind.

13. Wellenleiter-Laser nach einem der Ansprüche 1 bis 12, **dadurch gekennzeichnet**, daß alle Profile des Stabes aus Keramik bestehen.

14. Wellenleiter-Laser nach einem der Ansprüche 1 bis 13, **dadurch gekennzeichnet**, daß die Profile aus einem der Werkstoffe $Al_2O_3$, BN, ALN bestehen.

## Claims

1. Transversely excited waveguide laser, which contains at least one discharge channel and two cooling channels arranged symmetrically thereto, the channels being accommodated in a rod made of vacuum-suitable high-temperature insulating material, said rod being composed of differently profiled parts, the individual profiles being soldered to one another over their entire longitudinal extent, the discharge channel being formed by a groove (11) in one of the profile parts (1) and the groove (11) and the cooling channels being terminated in each case on the end face of the rod by a soldered-on end plate (6), characterised in that the rod contains at least one discharge profile (1, 4) and two cooling profiles (2, 3), in that the three profiles have at least approximately the same coefficient of thermal expansion, in that the discharge profile contains the discharge channel and has solder surfaces (17, 18) on two mutually opposite sides of the discharge channel, in that one cooling profile (2, 3) each is soldered onto said two solder surfaces, in that the cooling profiles contain cooling channels (12), whose generated surfaces facing the discharge channel are each wider than the perpendicular projection of the closest limiting surface of the discharge channel on the generated surface of the cooling channel facing said discharge channel.

2. Waveguide laser according to Claim 1, characterised in that the cross-section of the discharge channel is rotationally symmetrical.

3. Waveguide laser according to one of Claims 1 or 2, characterised in that the limiting surface of the discharge channel facing the cooling channel and the generated surface of the cooling channel facing the discharge channel are planar and parallel to one another, and in that the cross-section of the cooling channel is mirror-symmetrical relative to the surface normal on the corresponding limiting surface of the discharge channel.

4. Waveguide laser according to Claim 3, characterised in that the cooling channels and the discharge channel have a rectangular cross-section.

5. Waveguide laser according to one of Claims 1 to 4, characterised in that the discharge profile is composed of a channel part and a cover part, in that the channel part contains a groove as discharge channel, in that the cover part has the same wall thickness as the floor under the groove and the same width as the channel part and is arranged above the groove, and in that the two adjoining cooling profiles are formed from mutually identical extruded profiles.

6. Waveguide laser according to one of Claims 1 to 5, characterised in that an interconnect suitable as electrode for transverse excitation of the laser gas is applied to the solder surfaces of the discharge profile on the side averted from the discharge channel in each case.

7. Waveguide laser according to one of Claims 1 to 6, characterised in that all profiles and the end plates soldered onto the rod consist of identical material and are soldered together by means of glass solder.

8. Waveguide laser according to one of Claims 1 to 7, characterised in that the end plates each have an opening in the region of the discharge channel, and in that mirror carriers made of metal having a coefficient of thermal expansion matched to that of the insulating material are soldered onto the end plates.

9. Waveguide laser according to one of Claims 1 to 8, characterised in that the two cooling profiles are rectangular profiles, and have bores leading outwards from the cooling channel in the region of their end faces, and in that cooling water connections are subsequently soldered onto said bores.

10. Waveguide laser according to one of Claims 1 to 9, characterised in that the discharge channel has a cross-section of approximately 1 square mm to 16 square mm.

11. Waveguide laser according to one of Claims 1 to 10, characterised in that the overall wall thickness between the discharge channel and a neighbouring cooling channel is no greater than the extent of the discharge channel in the direction of the surface normal on the solder surfaces of the discharge profile.

12. Waveguide laser according to one of Claims 1 to 11, characterised in that the solder surfaces of the cooling profiles and of the discharge profile are ground planar.

13. Waveguide laser according to one of Claims 1 to 12, characterised in that all profiles of the rod consist of ceramic.

14. Waveguide laser according to one of Claims 1 to 13, characterised in that the profiles consist of one of the materials $Al_2O_3$, BN, AlN.

**Revendications**

1. Laser à guide d'ondes, à excitation transversale, qui contient au moins un canal de décharge et deux canaux de refroidissement disposés symétriquement par rapport au canal de décharge, et dans lequel les canaux sont logés dans un barreau réalisé en un matériau isolant résistant aux températures élevées et convenant pour l'établissement d'un vide, ce barreau est formé par la réunion d'éléments possédant des profils différents, les différents profilés sont réunis entre eux par brasage sur toute leur étendue longitudinale, le canal de décharge est formé par une rainure (11) ménagée dans l'un des éléments profilés (1) et la rainure (11) et les canaux de refroidissement se terminent respectivement au niveau de la face frontale du barreau par une plaque frontale (6) fixée par brasage, caractérisé par le fait que le barreau contient au moins un profilé de décharge (1,4) et deux profilés de refroidissement (2,3), que les trois profilés possèdent au moins approximativement le même coefficient de dilatation thermique, que le profilé de décharge contient le canal de décharge et possède des surfaces de brasage (17,18) sur deux côtés, opposés l'un à l'autre, du canal de décharge, qu'un profilé de refroidissement (2,3) est fixé par brasage respectivement sur ses deux surfaces de brasage, que les profilés de refroidissement contiennent des canaux de refroidissement (12), dont les surfaces enveloppes tournées vers le canal de décharge sont respectivement plus larges que la projection verticale de la surface limite, tout d'abord horizontale, du canal de décharge sur la surface enveloppe, qui lui fait face, du canal de refroidissement.

2. Laser à guide d'ondes suivant la revendication 1, caractérisé par le fait que la section transversale du canal de décharge présente une symétrie de révolution.

3. Laser à guide d'ondes suivant l'une des revendications 1 ou 2, caractérisé par le fait que la surface limite du canal de décharge, tournée vers le canal de refroidissement, et la surface enveloppe du canal de refroidissement, tournée vers le canal de décharge, sont planes et parallèles et que la section transversale du canal de refroidissement est symétrique par rapport à la normale à la surface limite correspondante du canal de décharge.

4. Laser à guide d'ondes suivant la revendication 3, caractérisé par le fait que les canaux de refroidissement et le canal de décharge possèdent une section transversale rectangulaire.

5. Laser à guide d'ondes suivant l'une des revendications 1 à 4, caractérisé par le fait que le profilé de décharge est formé par la réunion d'un élément à canal et d'un élément de recouvrement, que l'élément à canal contient une rainure formant canal de décharge, que la partie de recouvrement possède la même épaisseur de paroi que le fond au-dessus de la rainure et que les deux profilés de refroidissement contigus sont formés par des profilés extrudés identiques.

6. Laser à guide d'ondes suivant l'une des revendications 1 à 4, caractérisé par le fait que sur la surface de brasage du profilé de décharge est disposée, respectivement sur la face tournée à l'opposé du canal de décharge, une voie conductrice qui convient en tant qu'électrode pour l'excitation transversale du gaz du laser.

7. Laser à guide d'ondes suivant l'une des revendications 1 à 6, caractérisé par le fait que tous les profilés et les plaques frontales fixées par brasage sur le barreau sont réalisés avec le même matériau et sont réunis par brasage au moyen d'une brasure en verre.

8. Laser à guide d'ondes suivant l'une des revendications 1 à 7, caractérisé par le fait que les plaques frontales possèdent respectivement un évidement dans la zone de canal de décharge et que des porte-miroirs métalliques possédant un coefficient de dilatation thermique adapté à celui du matériau isolant, sont fixés par brasage sur les plaques frontales.

9. Laser à guide d'ondes suivant l'une des revendications 1 à 8, caractérisé par le fait que les deux profilés de refroidissement sont des profilés rectangulaires, qui possèdent, au niveau de leurs faces frontales, des perçages débouchant à l'extérieur à partir du canal de refroidissement, et que des raccords pour l'eau de refroidissement sont fixés ultérieurement par brasage à ces perçages.

10. Laser à guide d'ondes suivant l'une des revendications 1 à 9, caractérisé par le fait que le canal de décharge possède une section transversale comprise entre environ 1 mm$^2$ et 16 mm$^2$.

11. Laser à guide d'ondes suivant l'une des revendications 1 à 10, caractérisé par le fait que l'épaisseur totale de paroi entre le canal de décharge et un canal de refroidissement voisin n'est pas supérieure à l'étendue du canal de décharge dans la direction de la normale aux surfaces de brasage du profilé de décharge.

12. Laser à guide d'ondes suivant l'une des revendications 1 à 11, caractérisé par le fait que les surfaces de brasage des profilés de refroidissement et du profilé de décharge sont lisses et plates.

13. Laser à guide d'ondes suivant l'une des revendications 1 à 12, caractérisé par le fait que tous les profilés du barreau sont formés d'une céramique.

14. Laser à guide d'ondes suivant l'une des revendications 1 à 13, caractérisé par le fait que les profilés sont réalisés avec l'un des matériaux $Al_2O_2$, BN, AIN.